# EUROPEAN PATENT SPECIFICATION

(11) **EP 2 126 035 B1**
(45) Date of publication and mention of the grant of the patent: **21.01.2015**
(21) Application number: 08714436.6
(22) Date of filing: 20.03.2008
(51) Int. Cl.: C12G 3/00, C12H 1/22, C12G 3/04, B67C 3/02, C12G 3/06

(54) **PACKAGING BEVERAGES**
VERPACKUNG VON GETRÄNKEN
CONDITIONNEMENT DE BOISSONS

(30) Priority: 23.03.2007 AU 2007901546 P
(43) Date of publication of application: 02.12.2009
(73) Proprietor: Innvopak Systems Pty Ltd, South Melbourne, VIC 3205 (AU)
(72) Inventor: STOKES, Gregory, John, Charles, South Melbourne Victoria 3205 (AU)
(74) Representative: Andrae | Westendorp Patentanwälte Partnerschaft
(86) International application number: PCT/AU2008/000391
(87) International publication number: WO 2008/116250

(56) References cited:
- EP-B1- 1 429 968
- WO-A1-00/30468
- WO-A1-96/11578
- WO-A1-2004/083359
- JP-A- 62 014 777
- US-A- 3 832 962
- US-A- 4 178 389
- US-A- 4 784 859
- US-B1- 6 669 973
- DATABASE CAPLUS [Online] TOHMA ET AL., XP008112395 Retrieved from STN Database accession no. (1987:482208) & KEIKINZOKU vol. 37, no. 1, pages 67 - 71

## Description

This invention relates to improving the shelf life and storage characteristics of alcoholic beverages particularly ready to drink (RTD) beverages in aluminium containers.

### Background to the invention

Mixtures of distilled spirits such as whisky, bourbon, gin, vodka, rum and brandy with carbonated soft drinks such as cola, dry ginger, tonic water, soda water or a citrus juice are popular. RTD's are premixed and packaged in a container with a known alcoholic content and offer convenience and consistency. The alcohol content is usually from 4 to 10% and typically 5 to 6 %.

A significant portion of the RTD market is directed to males who prefer to drink from cans rather than bottles. Females typically prefer to drink from bottles. Packaging RTD's in aluminium cans has led to some problems in deterioration in flavour and the introduction of taint over storage periods of three months or more. This can be in part due to corrosion of the can by the acidic components of the can and the failure to control deterioration of the mixtures components in the can over time. The deterioration may be due to the storage conditions such as high temperatures and excessive agitation or poor canning protocols. The change in flavour is usually perceived as a loss in freshness and is undesirable. Sometimes the beverage can undergo a change in appearance or colour but this is not necessarily perceived as a deterioration.

Flavour and changes in flavour are subjective and usually a tasting panel is used to quantify and identify the perceived changes. Flavour is a combination of taste from the tongue based sensors of sweet salt sour and bitter, aromas as perceived by the olfactory organ and by the sensation of mouth feel. Being subjective flavour is experienced differently by each drinker but tasting panel tests are useful in obtaining comparisons and particularly in sensing changes over time. Shelf life of more than three months and over a year in canned beverages is required because transport and distribution can take some time and the need for inventory in each part of the distribution chain means the cans may take up to 12 months from canning until they are consumed.

The provision of improved methods of packaging wine are disclosed in European patent 1429968. Product stability and shelf life are enhanced using a combination of controlling wine parameters, canning conditions and the lining of the aluminium can. It is an object of this invention to provide an improved packaging protocol for RTD beverages that extends the useful shelf life of the beverages and avoids deterioration due to long or rigorous storage.

US 4 784 859, US 4 178 389, JP 62 14777, WO 2004/83359 and WO 00/30468 disclose each methods of packaging alcoholic beverages.

### Brief Description of the Invention

To this end the present invention provides a method of packaging a ready to drink alcoholic beverage in an aluminium can which includes the steps of
a) Preparing a syrup by combining the alcoholic component with a concentrated mixer component and other desired additives
b) Maturing the syrup for at least 12 hours at ambient temperature
c) Combining the matured syrup with water and de-aerating the combined product
d) Filling the de-aerated combined product into a two piece aluminium can which has been coated with a corrosion resistant inert lining.

The alcoholic component is selected from an alcohol containing liquid with an alcoholic content above 12% preferably from fortified wines, whisky, bourbon, gin, vodka, rum and brandy.

The mixer component is a concentrate used in making the mixer drink and is preferably selected from concentrated fruit juices and or the concentrate or syrups used in making cola, dry ginger, tonic water or soda water.

Other ingredients may include sweeteners, other flavourings, and functional ingredients such a stimulants like guarana and caffeine.

It is preferred that the ambient temperature during maturation is in the range of 15 to 25 C. The period of maturation is preferably at least 24 hours more preferably 48 hours. The maturation enables the syrup to become de-aerated and intimately mixed to enhance the perception of flavour in the finished product.

The water is preferably chilled and de-aerated and more preferably is sterilised preferably using UV radiation.

Preferably the temperature of the combined water and syrup is from 1-5C preferably 2-3 C at the time of filling the cans.

In filling the cans the head space volume is kept low and is preferably no more than 1.5 ml. Usually the beverages are carbonated at the time of filling the cans and the internal pressure of the can should be sufficient to provide rigidity to the filled can to prevent rupture of the liner and indentation of the can body by impacts.

### Detailed description of the invention

In a preferred embodiment of the invention the Ready to Drink products are packaged in two piece aluminium cans. The invention is also applicable to bottle cans which have a conical neck closed by a screw cap to make them resealable. The internal surface of the can and closure portion are lined with a polymeric protective film forming coating that provides a relatively inert surface to the RTD product and protects the aluminium surface from corrosion and to prevent aluminium from contaminating the RTD contents.. A preferred lining is composed of an epoxy resin combined with a formaldehyde based cross linking agent. Preferably the film thickness is greater than that used for linings in beer and soft drink cans. A suitable thickness is obtained by applying 175 gm in a 375 ml can to give films between 5 to 10 microns. The epoxy resin is preferably based on bisphenol A to provide corrosion resistance. The crosslinking agent may be a formaldehyde condensate of melamine or phenol. The film may be applied as a coating using an organic solvent. Alternatively the film can be applied using an aqueous solution or dispersion. To cure the lining the can is baked at a temperature in the range of 165 - 210°C for about 4 minutes.

It is an important aspect of this invention to hold the formed syrup or concentrate for a maturation period prior to dilution with water at the time of filling the can. The maturation period may be as short as 12hours if the holding temperature is of the order of 37°C. Preferably the concentrate is matured at ambient temperature for up to 48 hours.

The composition of the syrups used are conventional and the major difference in preparing the beverages is the need for maturation of the syrup prior to mixing with water so that after canning and after extended storage in the can the RTD will still be perceived to be fresh and not to have lost any flavour. An additional preferred requirement is that the water added to the syrup is chilled so that the temperature of the combined product in the can is less than 4 °C.

### Example

An RTD whisky and cola beverage was prepared by first preparing a syrup using water sterilised with UV light. The Syrup was formed by combining the following ingredients using low shear conditions to minimise aeration:

| | |
|---|---|
| Water | 22 litre |
| Sugar syrup | 50 litre |
| Ethanol | 25 litre |
| Cola flavour | 0.4 litre |
| Cola acid | 0.5 litre |
| Preservative | 0.4 litre |
| Colour | 0.5 litre |
| Citric acid | 0.35 litre |
| Whisky flavour | 1 litre |

The syrup was matured for 48 hours at 20 °C. The syrup was the transferred to a filling line where the syrup was combined with chilled water in a ratio of 1 part syrup to 3 parts water. The 375ml Aluminium cans were filled at 2°C under carbonation to provide a product with 3.4 volume of carbon dioxide. The air content of the filled product was 1 ml.

To compare this invention with conventionally filled cans and bottles two batches of conventional bottles and cans were prepared at the same time. The conventional cans were filled at 4°C using a syrup prepared and immediately transported to the filling line. After filling the air content in the conventional cans was 2.5 ml.

Sets of the 3 products were then stored at 20°C and 37 °C and assessed by a panel of tasters initially and at intervals of 1, 2, 3, and 6 months as shown in table 1.

The flavour was assessed by a panel of tasters drawn from beverage industry experts, production staff and the general public.

**Table 1**

| Storage time | storage temperature | Conventional Can package | Conventional bottle | Prepared as in example |
|---|---|---|---|---|
| initial | 20°C | 10 | 10 | 10 |
| 1 month | 20°C | 9 | 10 | 10 |
| 2 months | 20°C | 8 | 10 | 10 |
| 3 months | 20°C | 7 | 9 | 9 |
| 6 months | 20°C | 6 | 8 | 8 |
| 1 month | 37°C | 8 | 10 | 9 |
| 2 months | 37°C | 7 | 9 | 9 |
| 3 months | 37°C | 5 | 9 | 8 |
| 6 months | 37°C | 3 | 7 | 7 |

| | | | | |
|---|---|---|---|---|
| Rating: 9-10 = excellent ; 8-9 = good ; 7-8 = acceptable ; below 7 = unacceptable | | | | |

These tests indicate improved storage properties for the RTD's prepared by the method of this invention.

A further advantage of this invention is that sulphur dioxide may be used as a preservative. RTD's conventionally packaged in cans have been prone to poor storage properties when sulphur dioxide was used a preservative. To avoid the problem sodium benzoate was typically used instead in conventional canned RTD's. The present invention allows the more commonly accepted preservative to be used. Those skilled in the art will realize that this invention provides an improved method of extending the shelf life of RTD canned products. Those skilled in the art will also realise that this invention may be implemented in embodiments other than those described without departing from the core teachings of this invention.

## Claims

1. A method of packaging a ready to drink alcoholic beverage in an aluminium can which includes the steps of
a) Preparing a syrup by combining the alcoholic component with a concentrated mixer component and other desired additives
b) Maturing the syrup for at least 12 hours at ambient temperature
c) Combining the matured syrup with water and de-aerating the combined product
d) Filling the de-aerated combined product into a two piece aluminium can which has been coated with a corrosion resistant inert lining.

2. A method as claimed in claim 1 in which the water used in step c) is chilled.

3. A method as claimed in claim 1 in which the product is carbonated during step d).

4. A method as claimed in claim 1 in which the temperature of the syrup in step b) is above 20 °C

5. A method as claimed in any preceding claim in which the water is sterilized.

## Patentansprüche

1. Verfahren zur Verpackung eines trinkfertigen alkoholischen Getränks in eine Aluminiumdose, wobei das Verfahren die folgenden Schritte beinhaltet:
a) Herstellen eines Sirups durch Vereinigung der alkoholischen Komponente mit einer konzentrierten Mixerkomponente und anderen gewünschten Zusätzen
b) Reifen des Sirups für mindestens 12 Stunden bei Raumtemperatur
c) Vereinigen des gereiften Sirups mit Wasser und Entlüften des vereinigten Produkts
d) Abfüllen des entlüfteten vereinigten Produkts in eine zweiteilige Aluminiumdose, welche mit einer korrosionsresistenten, inerten Beschichtung beschichtet wurde.

2. Verfahren gemäß Anspruch 1, worin das in Schritt c) verwendete Wasser gekühlt ist.

3. Verfahren gemäß Anspruch 1, worin das Produkt während des Schritts d) mit Kohlensäure versetzt wird.

4. Verfahren gemäß Anspruch 1, worin die Temperatur des Sirups in Schritt b) bei über 20°C liegt.

5. Verfahren gemäß eines der vorhergehenden Ansprüche, worin das Wasser sterilisiert ist.

## Revendications

1. Procédé de conditionnement, dans une canette en aluminium, d'une boisson alcoolisée prête à boire, comprenant les étapes consistant :
a) à préparer un sirop en combinant le composant alcoolisé avec un composant concentré du mélangeur et avec d'autres additifs souhaités,
b) à porter le sirop à maturation pendant au moins 12 heures à température ambiante,
c) à combiner le sirop à maturité avec de l'eau et à désaérer le produit combiné,
d) à remplir dans une canette en aluminium en deux parties, le produit combiné et désaéré, canette qui a été recouverte d'un revêtement inerte résistant à la corrosion.

2. Procédé comme revendiqué dans la revendication 1, dans lequel l'eau utilisée au cours de l'étape c) est réfrigérée.

3. Procédé comme revendiqué dans la revendication 1, dans lequel le produit est carbonaté au cours de l'étape d).

4. Procédé comme revendiqué dans la revendication 1, dans lequel la température du sirop au cours de l'étape b) est supérieure à 20°C.

5. Procédé comme revendiqué dans l'une quelconque des revendications précédentes, dans lequel l'eau est stérilisé.
